# EUROPEAN PATENT APPLICATION

(11) **EP 2 014 435 A1**
(43) Date of publication of application: **14.01.2009**
(21) Application number: 08010215.5
(22) Date of filing: 04.06.2008
(51) Int. Cl.: B29C 33/42, B60R 13/02

(54) **Skin material, skin material production method and composite skin for automotive interior trim**

(30) Priority: 06.06.2007 JP 2007150360
(71) Applicant: Nissan Motor Co., Ltd., Kanagawa 221-0023 (JP)
(72) Inventor: Sano, Kaori, Atsugi-shi Kanagawa 243-0123 (JP); Komatsu, Motoru, Atsugi-shi Kanagawa 243-0123 (JP); Enomoto, Tetsuya, Atsugi-shi Kanagawa 243-0123 (JP)
(74) Representative: Hager, Thomas Johannes

(57) **Abstract**

There is provided a skin material with a substrate (20) and a polymeric layer (10). The polymeric layer has a first surface adhering to the substrate and a second surface being exposed to the outside and formed with fine recesses. The fine recesses have a depth (S3) of 30 to 130 μm and a projected area ratio of 5 to 20% with respect to the total projected area of the second surface of the polymeric layer.

## Description

### BACKGROUND OF THE INVENTION

The present invention relates a skin material having a uniform thickness and improved touch such as moist (supple) feel and smoothness without deterioration in appearance, a production method of the skin material and a composite skin for an automotive interior trim using the skin material.

Various skin materials have been proposed for automotive interior trims. Patent Publication 1 proposes a skin material produced by calendering or extruding a vinyl chloride copolymer composition into a sheet and vacuum forming the sheet. Patent Publication 2 proposes a skin material produced by vacuum forming a composition sheet of polypropylene resin and olefin thermoplastic elastomer using a vacuum forming female mold with an embossing mold surface. Patent Publication 3 proposes a skin material produced by slush molding a thermoplastic synthetic resin powder. Patent Publication 4 proposes a skin material produced by spraying a thermoplastic elastomer powder of polyolefin resin and ethylene/α-olefin copolymer rubber into an embossing mold and melting and adhering the powder to a grain texture surface of the embossing mold. Patent Publication 5 proposes a skin material produced by blending a thermoplastic urethane resin powder with a maleimide polymer powder, which has a particle diameter of 0.5 to 200 µm and does not melt at a molding temperature, and slush molding the powder blend using an embossing mold. Patent Publication 6 proposes a skin material produced by spray molding using two urethane elastomers. Patent Publication 7 proposes a skin material produced by blasting a mold and molding a resin with the blasted mold to form glossy protruding areas and nonglossy fine uneven areas on the molded resin.
- [Patent Publication 1]: Japanese Patent Publication No. S60-037784B
- [Patent Publication 2]: Japanese Patent Publication No. S63-004776B
- [Patent Publication 3]: Japanese Patent Publication No. H02-012733B
- [Patent Publication 4]: Japanese Patent No. 2517073B
- [Patent Publication 5]: Japanese Patent No. 3637694B
- [Patent Publication 6]: Published Japanese Translation of PCT Application No. 10-500366
- [Patent Publication 7]: Japanese Laid-Open Patent Publication No. H09-239739A

### SUMMARY OF THE INVENTION

In Patent Publications 1 and 2, the skin material cannot attain a uniform thickness and touch as the vacuum forming causes stretching of the sheet and smoothing of the embossed texture pattern. In Patent Publications 3 to 5, the skin material cannot attain a uniform thickness and good touch as the adhesion of the raw material powder to the mold surface varies depending on the shape. In Patent Publication 6, the skin material cannot also attain a uniform thickness and good touch as it is difficult to spray the elastomer into a narrow mold space without accumulation and burrs of the elastomer. In Patent Publication 7, the skin material cannot attain a desired level of improved touch.

It is therefore an object of the present invention to provide a skin material having a uniform thickness and improved touch such as moist (supple) feel and smoothness without deterioration in material appearance. It is also an object of the present invention to provide a production method of the skin material and a composite skin for an automotive interior trim using the skin material.

As a result of extensive researches, it has been found that a skin material can attain a uniform thickness and improved touch such as moist (supple) feel and smoothness without appearance deterioration by forming a plurality of fine recesses in the skin material with a specific recess depth and projected area. The present invention is based on this finding.

According to a first aspect of the present invention, there is provided a skin material comprising: a substrate; and a polymeric layer having a first surface adhering to the substrate and a second surface exposed to the outside and formed with a pattern of fine recesses, the fine recesses having a depth of 30 to 130 µm and a projected area ratio of 5 to 20% with respect to the total projected area of the second surface of the polymeric layer.

According to a second aspect of the present invention, there is provided a method of producing the skin material comprising: preparing a mold unit with front and back molds; first applying a release agent selected from the group consisting of a nylon-based release agent and a silicon-based release agent to the front mold; second applying a dispersion medium containing a powder of fine particles and a dispersant to the front mold; third applying a raw material for the polymeric layer to the front mold; assembling the front and back molds together to define a mold cavity in the mold unit; injecting a raw material for the substrate into the mold cavity; reacting the raw material in the mold cavity to form the skin material with the polymeric layer and the substrate; and opening the mold unit to release the skin material from the mold unit.

According to a third aspect of the present invention, there is provided a method of producing the skin material comprising: preparing a mold unit with front and back molds; first applying a release agent containing a powder of fine particles, a dispersant and at least one of a silicon-based wax component and a process oil wax component to the front mold; second applying a raw material for the polymeric layer to the front mold; assembling the front and back molds together to define a mold cavity in the mold unit; injecting a raw material for the substrate into the mold cavity; reacting the raw material in the mold cavity to form the skin material with the polymeric layer and the substrate; and opening the mold unit to release the skin material from the mold unit.

According to a fourth aspect of the present invention, there is provided a method of producing the skin material comprising: preparing a mold unit with front and back molds; first applying a release agent to the front mold; second applying a raw material for the polymeric layer containing a powder of fine particles and a dispersant to the front mold; assembling the front and back molds together to define a mold cavity in the mold unit; injecting a raw material for the substrate into the mold cavity; reacting the raw material in the mold cavity to form the skin material with the polymeric layer and the substrate; and opening the mold unit to release the skin material from the mold unit.

According to a fifth aspect of the present invention, there is provided a composite skin for an automotive interior trim comprising the skin material.

The other objects and features of the present invention will also become understood from the following description.

### BRIEF DESCRIPTION OF THE DRAWINGS

FIG. 1 is a projection view of a skin material according to a first embodiment of the present invention.

FIG. 2 is a section view of the skin material according to the first embodiment of the present invention.

FIG. 3 is a section view of a skin material according to a second embodiment of the present invention.

FIGS. 4A to 4D are schematic views showing one example of how to produce the skin material according to the second embodiment of the present invention.

### DESCRIPTION OF THE EMBODIMENTS

The present invention will be described below with reference to the drawings.

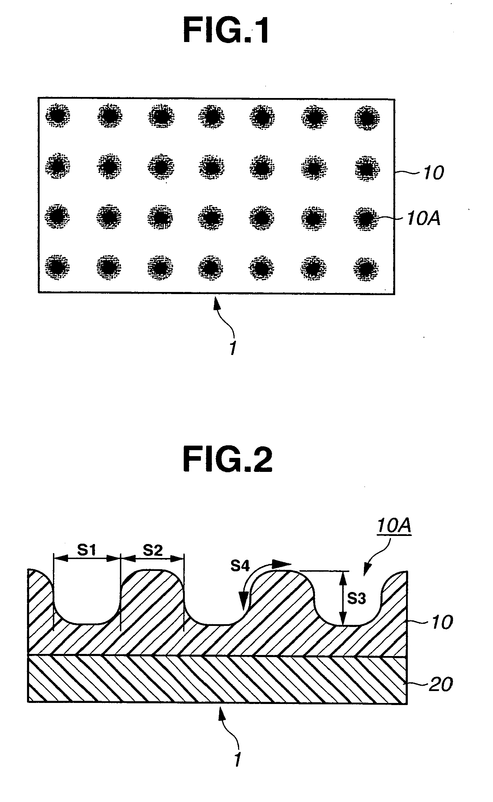

As shown in FIGS. 1 and 2, a skin material 1 according to an exemplary embodiment of the present invention includes a substrate 20 and a polymeric layer 10 having one surface adhering to the substrate 20 and the other opposite surface exposed to the outside and formed with an embossed (pressed) texture pattern of fine recesses 10A. (The surface of the polymeric layer 10 formed with the fine recesses 10A is hereinafter just referred to as the surface of the polymeric layer 10 and defined as a front side of the skin material 1.) The fine recesses 10A have a depth S3 of 30 to 130 µm and a projected area ratio of 5 to 20% with respect to the total projected area of the surface of the polymeric layer 10. In the present embodiment, the fine recesses 10A are substantially circular in shape. With such a structure, the skin material 1 attains a uniform thickness and improved touch such as moist (supple) feel and smoothness without deterioration in appearance.

There is no particular restriction on the substrate 20. The substrate 20 can be made of any appropriate material. Preferably, the substrate 20 contains a nonthermoplastic, microfoamed urethane elastomer prepared by reaction injection molding so that the skin material 1 can attain a further improved touch.

There is also no particular restriction on the polymeric layer 10 as long as the fine recesses 10A have a depth S3 of 30 to 130 µm and a projected area ratio of 5 to 20% with respect to the total projected area of the surface of the polymeric layer 10. The polymeric layer 10 can be made of any appropriate material such as an acrylic paint. The polymeric layer 10 may have any other fine embossed (pressed) surface pattern or patterns by superimposing of the above fine-recess pattern on the other embossed surface pattern or patterns. With such a fine multiple embossed pattern on the polymeric layer 10, the skin material 1 can attain a further improved touch without appearance deterioration. Examples of the embossed surface pattern are a leather embossed pattern (e.g. a reverse pattern of leather grain) and a regular or semiregular large decorative embossed pattern. Further, the polymeric layer 10 may have a single-layer structure or a laminated multilayer structure.

It is preferable that the pitch S2 of the fine recesses 10A is in the range of 1 to 10 and the maximum diameter S1 of the fine recesses 10A is in the range of 3 to 4 assuming that the depth S3 of the fine recesses 10A is 1. In other words, the fine recesses 10A preferably has a pitch S2 of 30 to 1300 µm and a maximum diameter S1 of 90 to 520 µm. If the maximum diameter S1 of the fine recesses 10A exceeds 520 µm (regardless of whether the pitch S2 of the fine recesses 10A falls within the range of 30 to 1300 µm), the fine recesses 10A may be readily distinguished by the naked eye and result in appearance deteriorations. If the pitch S2 of the fine recesses 10A is smaller than 30 µm and the maximum diameter S 1 of the fine recesses 10A is smaller than 90 µm, the fine recesses 10A may be too small in size to be perceptible by the touch. If the pitch S2 of the fine recesses 10A exceeds 1300 µm (regardless of whether the maximum diameter S 1 of the fine recesses 10A falls within the range of 90 to 520 µm), the fine recesses 10A may be too far apart from one another to provide a good touch. It is particularly preferable that the fine recesses 10A have a depth S3 of 50 to 110 µm, a pitch S2 of 50 to 300 µm and a maximum diameter S1 of 90 to 130 µm.

The pitch S2 of the fine recesses 10A may be either uniform or irregular and nonuniform within the above-specified range. Either and both of the depth S3 and the maximum diameter S1 of the fine recesses 10A may be either uniform or irregular and nonuniform within the above-specified ranges.

The fine recesses 10A also preferably have rounded opening edges S4 as shown in FIG. 2. If the edges of the fine recesses 10A are not rounded, the skin material 1 may become undesirably rough to the touch. It is particularly preferable that the rounded edges S4 of the fine recesses 10A have a curvature radius of 30 to 100 µm for improvements in touch, notably smoothness and softness.

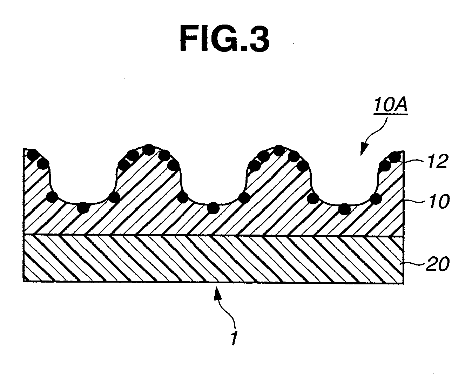

As shown in FIG. 3, the polymeric layer 10 may preferably contain fine particles 12 for further improvement in touch. In this case, the fine particles 12 have an average particle diameter smaller than the maximum diameter S1 of the fine recesses 10A. If the average particle diameter of the fine particles 12 is larger than the maximum diameter S 1 of the fine recesses 10A, the fine particles 12 fill in and close the fine recesses 10A and thus may fail to provide a good touch. Further, the fine particles 12 are at least partially exposed to the outside at the surface of the polymeric layer 10 and in the recesses 10A. The fine particles 12 do not provide a good touch if not exposed at the surface of the polymeric layer 10.

More specifically, it is preferable that the fine particles 12 have an average particle diameter of 8 to 30 µm. If the average particle diameter of the fine particles 12 is smaller than 8 µm, the volume percentage of the fine particles 12 buried in the polymeric layer 10 may become too high, i.e., the degree of exposure of the fine particles 12 at the surface of the polymeric layer 10 may become too low to provide an improved touch without increase in the content amount of the fine particles 12. If the average particle diameter of the fine particles 12 is larger than 30 µm, the fine particles 12 fill in and close the fine recesses 10A and then fail to provide a good touch.

It is also preferable that the content amount of the fine particles 12 in the polymeric layer 10 is in a range of 0.1 to 2.0 g/m². If the content amount of the fine particles 12 is less than 0.1 g/m², the polymeric layer 10 may not provide an improved tough as compared to the case with no fine particles. If the content amount of the fine particles 12 exceeds 2.0 g/m², the color and luster of the polymeric layer 10 may change to cause a deleterious effect on the appearance of the polymeric layer 10. In addition, the abrasion resistance of the polymeric layer 10 may decrease with increase in the percentage of the fine particles 12 unexposed at the surface of the polymeric layer 10.

The fine particles 12 can be selected appropriately from those of plant origin materials such as chaff, straw, bamboo, kenaf and hemp, animal origin materials such as leather, silk, collagen, wool, chitin and chitosan and synthetic materials such as polymer gel, acrylic bead and urethane bead. These fine particles are used solely or in any combination of two or more kinds thereof.

For example, the fine particles 12 can be of leather or silk with an average particle size of 8 to 30 µm and be contained in amount of 0.1 to 2.0 g/m².

The above skin material 1 can be produced by any of the following first to third methods. It is noted that the first to third skin material production methods will be explained for the case of the fine particles 12 added to the polymeric layer 10.

The first skin material production method features in-mold coating process using e.g. a two-plate injection mold unit with front and back side molds as explained below.

Raw materials for the polymeric layer 10 and the substrate 20 are first prepared. Further, a powder mixture is prepared by dispersing a powder of the fine particles 12 and a dispersant into a liquid medium. The dispersant can be of any appropriate type such as a metallic soap dispersant. The liquid medium can also be of any appropriate type such as isopropyl alcohol (IPA).

Next, a release agent is applied to the front mold. The release agent can be any known injection mold release agent that is, when applied as a coating film onto the injection mold, resistant to separation from the injection mold. Examples of the release agent are a fluoro release agent, a nylon-based release agent, a silicon-based release agent and any mixture thereof. The release agent may alternatively be applied to both of the front and back molds.

Subsequently, the powder dispersion medium and the raw material for the polymer layer 10 are applied to the front mold one by one in this order.

The front and back molds are assembled together to define a closed mold cavity between the front and back molds in the mold unit.

The raw material for the substrate 20 is injected in the mold cavity, and then, reacted and solidified.

Finally, the mold unit is opened to release the resulting skin material 1 from the mold unit. At the time of releasing the skin material 1 from the mold unit, the fine particles 12 are adhering to and partially exposed at the surface of the polymeric layer 10.

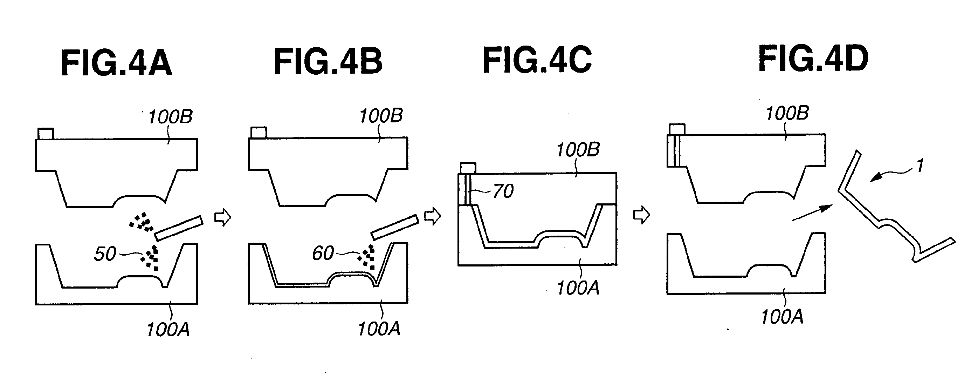

The second skin material production method is similar to the first skin production method except for the procedure of the in-mold coating process as shown in FIGS. 4A to 4D. By way of example, the front and back molds are herein provided in the form of so-called cavity and core molds 100A and 100B, respectively.

Raw materials 60 and 70 for the polymeric layer 10 and the substrate 20 are first prepared. On the other hand, a release agent 50 is prepared by the addition of a powder of the fine particles 12, a dispersant and at least one of a silicon-based wax component and a process oil wax component. The release agent can be any known injection mold release agent that is, when applied as a coating film to the injection mold, readily separable from the injection mold. The dispersant can also be of any appropriate type such as a metallic soap dispersant.

As shown in FIG. 4A, the release agent 50 is applied to the front and back molds 100A and 100B. The release agent 50 may alternatively be applied only to the front mold 100A.

The polymeric layer material 60 is subsequently applied to the front mold 100A as shown in FIG. 4B.

After that, the front and back molds 100A and 100B are assembled together to define a closed mold cavity between the front and back molds 100A and 100B in the mold unit as shown in FIG. 4C.

The substrate material 70 is injected into the mold cavity, and then, reacted and solidified.

Finally, the mold unit is opened to release the resulting skin material 1 from the mold unit as shown in FIG. 4D. At the time of releasing the skin material 1 from the mold unit, the fine particles 12 are adhering to and partially exposed at the surface of the polymeric layer 10.

The third skin material production method is similar to the first and second skin production methods except for the procedure of the in-mold coating process.

A raw material for the polymeric layer 10 is prepared by the addition of a powder of the fine particles 12 and a dispersant. The dispersant can be of any appropriate type such as a metallic soap dispersant. A raw material for the substrate 20 is also prepared.

Next, a release agent is applied to the front mold. The release agent can be any known injection mold release agent that is, when applied as a coating film to the injection mold, resistant to separation or readily separable from the injection mold. The release agent may alternatively be applied to both of the front and back molds.

The raw material for the polymeric layer 10 is subsequently applied to the front mold.

After that, the front and back molds are assembled together to define a closed mold cavity between the front and back molds in the mold unit.

The raw material for the substrate 20 is injected in the mold cavity, and then, reacted and solidified.

Finally, the mold unit is opened to release the resulting skin material 1 from the mold unit. At the time of releasing the skin material 1 from the mold unit, the fine particles 12 are adhering to and partially exposed at the surface of the polymeric layer 10.

As explained above, the polymeric layer 10 is formed as an in-mold coating on the injection molded substrate 20 by the above skin material production methods. This makes it possible to produce the skin material 1 easily and efficiently with a uniform thickness and improved touch without appearance deterioration.

The skin material 1 is suitably used in a composite skin for an automotive interior trim so that the automotive interior trim benefit from the uniform thickness and improved tough of the skin material 1 without appearance deterioration.

More specifically, the composite skin can be manufactured by laminating any core material to a back side of the skin material 1 (i.e. a surface of the substrate 2 of the skin material 1 opposite from the polymeric layer 10) in such a manner that the composite skin has a laminated structure of two or more layers of the skin material 1 and the core material.

The core material is preferably a thermoplastic resin containing polypropylene (PP), acrylonitrile butadiene styrene (ABS), polycarbonate (PC)/acrylonitrile butadiene styrene (ABS) or any mixture thereof. The use of the above thermoplastic resin as the core material allows stable mass-production of the composite skin even in a complicated three-dimensional form and thus leads to manufacturing efficiency improvement and cost reduction.

There is no particular restriction on the manufacturing method of the composite skin. For example, the composite skin can be manufactured by preparing the skin material 1 and the core material separately and bonding the skin material 1 and the core material together by an adhesive such as "4 Penguin Cement 378V chloropropylene adhesive", or forming the core material, placing the core material in the mold unit and injection molding the urethane elastomer substrate material into the mold unit to form the skin material 1 integral with the core material.

The composite skin may further preferably include a foam material laminated as an intermediate layer between the skin material 1 and the core material so that the composite skin has a laminated structure of three or more layers of the skin material 1, the foam material and the core material.

The foam material is preferably a semirigid thermosetting urethane foam having a density of 100 to 250 kg/m³. Herein, the semirigid thermosetting urethane foam is defined as a urethane foam having an open cell structure of 90%. If the density of the urethane foam is lower than 100 kg/m³, the composite skin may become difficult to handle due to e.g. the occurrence of pressure marks during manufacturing or drawing. If the density of the urethane foam exceeds 250 kg/m³, there may arises a deleterious effect on the softness of the composite skin due to hardness of the foam material. In terms of these points, the density of the urethane foam is more preferably 120 to 180 kg/m³.

The present invention will be described in more detail by reference to the following examples. It should be however noted that the following examples are only illustrative and not intended to limit the invention thereto.

### [Material Production]

### Example 1

A two-plate injection mold unit was first prepared as follows. A polyvinyl chloride (PVC) leather of 300 x 400 mm in size was produced using an original copy of multiple embossed pattern where fine round-edged recesses were superimposed on ordinary embossed pattern. Herein, the fine recesses had a projected area ratio of 20%, a depth of 100 µm, a pitch of 50 to 300 µm, a maximum diameter of 100 µm and a round edge curvature radius of 100 µm. A reverse model of the PVC leather produced prepared. A molding plate (as a front mold) was then electroformed according to the reverse model of the PVC leather. Another molding plate (as a back mold) was formed so as to define a mold cavity of specific thickness by combination with the electroformed molding plate.

A silicon-based (silicon-based wax-containing) release agent "ACMOS" was applied to the front and back molds uniformly at 15 g/m² by means of a spray gun "IWATA W-100" under the condition that the front and back molds were heated at 80°C.

On the other hand, a powder dispersion medium was prepared by dispersing a fine collagen powder of 10 µm in average particle size and a metallic soap dispersant into isopropyl alcohol (IPA).

After the release agent was dried, the powder dispersion medium was applied to the front mold uniformly by means of a spray gun "IWATA W-100".

A black pigment-containing acrylic paint "Aqua Fresh" was subsequently applied to the front mold uniformly by means of a spray gun "IWATA W-100" and dried to form a polymeric layer with a thickness of 40 µm.

The front and back molds were assembled together to close the mold unit.

A polyurethane elastomer was injected into the mold unit by means of a high-pressure injection machine "KraussMaffei MK ULKP 2KVV" and completely cure-hardened to form a substrate with a thickness of 1 mm and a specific gravity of 800 kg/m³.

Finally, the mold unit was opened to obtain a skin material in which the polymeric layer was formed on the substrate as an in-mold coating with an embossed pattern of fine recesses and a fine collagen particle content of 10 g/m².

### Example 2

A two-plate injection mold unit was prepared as follows. A PVC leather of 300 x 400 mm in size was produced using an original copy of multiple embossed pattern where fine round-edged recesses were superimposed on ordinary embossed pattern. Herein, the fine recesses had a projected area ratio of 20%, a depth of 100 µm, a pitch of 100 µm, a maximum diameter of 100 µm and a round edge curvature radius of 100 µm. A reverse model of the PVC leather was produced. A molding plate (as a front mold) was then electroformed according to the reverse model of the PVC leather. Another molding plate (as a back mold) was formed to define a mold cavity of specific thickness by combination with the electroformed molding plate.

A skin material was produced in the same manner as in Example 1, except for using the above-prepared mold unit. In the resulting skin material, the polymeric layer was formed on the substrate as an in-mold coating with an embossed pattern of fine round-edged recesses and a fine collagen particle content of 10 g/m².

### Example 3

A two-plate injection mold unit was prepared as follows. A PVC leather of 300 x 400 mm in size was produced using an original copy of multiple embossed pattern where fine round-edged recesses were superimposed on ordinary embossed pattern. Herein, the fine recesses had a projected area ratio of 20%, a depth of 50 µm, a pitch of 100 µm, a maximum diameter of 100 µm and a round edge curvature radius of 100 µm. A reverse model of the PVC leather was produced. A molding plate (as a front mold) was then electroformed according to the reverse model of the PVC leather. Another molding plate (as a back mold) was formed to define a mold cavity of specific thickness by combination with the electroformed molding plate.

A skin material was produced in the same manner as in Example 1, except for using the above-prepared mold unit. In the resulting skin material, the polymeric layer was formed on the substrate as an in-mold coating with an embossed pattern of fine round-edged recesses and a fine collagen particle content of 50 g/m².

### Example 4

The same two-plate injection mold unit as that of Example 2 was prepared.

A silicon-based release agent "ACMOS" was blended with a fine collagen powder of 10 µm in average particle size and a metallic soap dispersant, and then, applied to the front and back molds uniformly at 15 g/m² by means of a spray gun "IWATA W-100" under the condition that the front and back molds were heated at 80°C.

After the release agent was dried, a black pigment-containing acrylic paint "Aqua Fresh" was applied to the front mold uniformly by means of a spray gun "IWATA W-100" and dried to form a polymeric layer with a thickness of 40 µm.

The front and back molds were assembled together to close the mold unit.

A polyurethane elastomer was then injected into the mold unit by means of a high-pressure injection machine "KraussMaffei MK ULKP 2KVV" and completely cure-hardened to form a substrate with a thickness of 1 mm and a specific gravity of 800 kg/m³.

Finally, the mold unit was opened to obtain a skin material in which the polymeric layer was formed on the substrate as an in-mold coating with an embossed pattern of fine round-edged recesses and a fine collagen particle content of 50 g/m².

### Example 5

A skin material was produced in the same manner as in Example 4, except for preparing and using the same mold unit as that of Example 3. In the resulting skin material, the polymeric layer was formed on the substrate as an in-mold coating with an embossed pattern of fine round-edged recesses and a fine collagen particle content of 50 g/m².

### Example 6

The same two-plate injection mold unit as that of Example 2 was prepared.

A silicon-based (silicon-based wax-containing) release agent "ACMOS" was applied to the front and back molds uniformly at 15 g/m² by means of a spray gun "IWATA W-100" under the condition that the front and back molds were heated at 80°C.

On the other hand, a black pigment-containing acrylic paint "Aqua Fresh" was blended with a fine collagen powder of 10 µm in average particle size and a metallic soap dispersant.

After the release agent was dried, the acrylic paint was applied to the front mold uniformly by means of a spray gun "IWATA W-100" and dried to form a polymeric layer with a thickness of 40 µm.

The front and back molds were assembled together to close the mold unit.

A polyurethane elastomer was then injected into the mold unit by means of a high-pressure injection machine "KraussMaffei MK ULKP 2KVV" and completely cure-hardened to form a substrate with a thickness of 1 mm and a specific gravity of 800 kg/m³.

Finally, the mold unit was opened to obtain a skin material in which the polymeric layer was formed on the substrate as an in-mold coating with an embossed pattern of fine round-edged recesses and a fine collagen particle content of 50 g/m².

### Example 7

A skin material was produced in the same manner as in Example 6, except for preparing and using the same mold unit as that of Example 3. In the resulting skin material, the polymeric layer was formed on the substrate as an in-mold coating with an embossed pattern of fine round-edged recesses and a fine collagen particle content of 50 g/m².

### Example 8

The same two-plate injection mold unit as that of Example 2 was prepared.

A silicon-based (silicon-based wax-containing) release agent "ACMOS" was applied to the front and back molds uniformly at 15 g/m² by means of a spray gun "IWATA W-100" under the condition that the front and back molds were heated at 80°C.

After the release agent was dried, a black pigment-containing acrylic paint "Aqua Fresh" was applied to the front mold uniformly by means of a spray gun "IWATA W-100" and dried to form a polymeric layer with a thickness of 40 µm.

The front and back molds were assembled together to close the mold unit.

A polyurethane elastomer was then injected into the mold unit by means of a high-pressure injection machine "KraussMaffei MK ULKP 2KVV" and completely cure-hardened to form a substrate with a thickness of 1 mm and a specific gravity of 800 kg/m³.

Finally, the mold unit was opened to obtain a skin material in which the polymeric layer was formed on the substrate as an in-mold coating with an embossed pattern of fine round-edged recesses.

### Example 9

A skin material was produced in the same manner in Example 8, except for preparing and using the same mold unit as that of Example 3. In the resulting skin material, the polymeric layer was formed on the substrate as an in-mold coating with an embossed pattern of fine round-edged recesses.

### Comparative Example 1

A PVC sheet formed by calendering with a thickness of 1 mm was used as a skin material.

### Comparative Example 2

A thermoplastic polyolefin (TPO) sheet formed by extruding with a thickness of 1 mm was used as a skin material.

### Comparative Example 3

A thermoplastic polyurethane (TPU) powder slush material formed by spraying with a thickness of 1 mm was used as a skin material.

### Comparative Example 4

A two-plate injection mold unit was prepared as follows. A PVC leather of 300 x 400 mm in size was produced using an original copy of ordinary embossed pattern. A reverse model of the PVC leather was then produced. A molding plate (as a front mold) was electroformed according to the reverse model of the PVC leather. Another molding plate (as a back mold) was formed to define a mold cavity of specific thickness by combination with the electroformed molding plate.

A skin material was produced in the same manner in Example 8, except for using the above-prepared mold unit. In the resulting skin material, the polymeric layer was formed on the substrate as an in-mold coating with no fine recess embossed pattern.

### Comparative Example 5

A two-plate injection mold unit was prepared as follows. A PVC leather of 300 x 400 mm in size was produced using an original copy of multiple embossed pattern where fine recesses were superimposed on ordinary embossed pattern. Herein, the fine recesses had a projected area ratio of 3%, a depth of 1000 µm, a pitch of 1000 µm and a maximum diameter of 1000 µm. A reverse model of the PVC leather was then produced. A molding plate (as a front mold) was electroformed according to the reverse model of the PVC leather. Another molding plate (as a back mold) was formed to define a mold cavity of specific thickness by combination with the electroformed molding plate.

A skin material was produced in the same manner as in Example 8, except for using the above-prepared mold unit. In the resulting skin material, the polymeric layer was formed on the substrate as an in-mold coating with an embossed pattern of fine recesses.

### Comparative Example 6

A two-plate injection mold unit was prepared as follows. A PVC leather of 300 x 400 mm in size was produced using an original copy of multiple embossed pattern where fine recesses were superimposed on ordinary embossed pattern. Herein, the fine recesses had a projected area ratio of 3%, a depth of 300 µm, a pitch of 300 µm and a maximum diameter of 300 µm. A reverse model of the PVC leather was then produced. A molding plate (as a front mold) was electroformed according to the reverse model of the PVC leather. Another molding plate (as a back mold) was formed to define a mold cavity of specific thickness by combination with the electroformed molding plate.

A skin material was produced in the same manner as in Example 8, except for using the above-prepared mold unit. In the resulting skin material, the polymeric layer was formed on the substrate as an in-mold coating with an embossed pattern of fine recesses.

### Comparative Example 7

A two-plate injection mold unit was prepared as follows. A PVC leather of 300 x 400 mm in size was produced using an original copy of multiple embossed pattern where fine recesses were superimposed on ordinary embossed pattern. Herein, the fine recesses had a projected area ratio of 20%, a depth of 20 µm, a pitch of 20 µm and a maximum diameter of 20 µm. A reverse model of the PVC leather was then produced. A molding plate (as a front mold) was electroformed according to the reverse model of the PVC leather. Another molding plate (as a back mold) was formed to define a mold cavity of specific thickness by combination with the electroformed molding plate.

A skin material was produced in the same manner as in Example 8, except for using the above-prepared mold unit. In the resulting skin material, the polymeric layer was formed on the substrate as an in-mold coating with an embossed pattern of fine recesses.

### Comparative Example 8

A two-plate injection mold unit was prepared as follows. A PVC leather of 300 x 400 mm in size was produced using an original copy of multiple embossed pattern where fine round-edged recesses were superimposed on ordinary embossed pattern. Herein, the fine recesses had a projected area ratio of 20%, a depth of 1000 µm, a pitch of 1000 µm, a maximum diameter of 1000 µm and a round edge curvature radius of 200 µm. A reverse model of the PVC leather was then produced. A molding plate (as a front mold) was electroformed according to the reverse model of the PVC leather. Another molding plate (as a back mold) was formed to define a mold cavity of specific thickness by combination with the electroformed molding plate.

A skin material was produced in the same manner as in Example 8, except for using the above-prepared mold unit. In the resulting skin material, the polymeric layer was formed on the substrate as an in-mold coating with an embossed pattern of fine round-edged recesses.

### Comparative Example 9

A two-plate injection mold unit was prepared as follows. A PVC leather of 300 x 400 mm in size was produced using an original copy of multiple embossed pattern where fine round-edged recesses were superimposed on ordinary embossed pattern. Herein, the fine recesses had a projected area ratio of 20%, a depth of 300 µm, a pitch of 300 µm, a maximum diameter of 300 µm and a round edge curvature radius of 200 µm. A reverse model of the PVC leather was then produced. A molding plate (as a front mold) was electroformed according to the reverse model of the PVC leather. Another molding plate (as a back mold) was formed to define a mold cavity of specific thickness by combination with the electroformed molding plate.

A skin material was produced in the same manner as in Example 8, except for using the above-prepared mold unit. In the resulting skin material, the polymeric layer was formed on the substrate as an in-mold coating with an embossed pattern of fine round-edged recesses.

### Comparative Example 10

A two-plate injection mold unit was prepared as follows. A PVC leather of 300 x 400 mm in size was produced using an original copy of multiple embossed pattern where fine round-edged recesses were superimposed on ordinary embossed pattern. Herein, the fine recesses had a projected area ratio of 20%, a depth of 20 µm, a pitch of 20 µm, a maximum diameter of 20 µm and a round edge curvature radius of 200 µm. A reverse model of the PVC leather was then produced. A molding plate (as a front mold) was electroformed according to the reverse model of the PVC leather. Another molding plate (as a back mold) was formed to define a mold cavity of specific thickness by combination with the electroformed molding plate.

A skin material was produced in the same manner as in Example 8, except for using the above-prepared mold unit. In the resulting skin material, the polymeric layer was formed on the substrate as an in-mold coating with an embossed pattern of fine round-edged recesses.

### [Sensory Testing]

The skin materials of Examples 1-9 and Comparative Examples 1-10 were cut into A4 size and subjected to the following evaluations.

### Material Touch Evaluation

The touch (notably, softness) of the skin material was examined by moving a hand palm on the skin material and evaluated as follows on a point scale of 1 to 5. Herein, the touch evaluation test was conducted according to a blind test method so as to avoid the influence of visual sense such as "It appears moist (supple) or soft". The conventional skin material with no fine recesses (Comparative Example 4) was used as the reference (3 points) in the touch evaluation test.
5 points: much better
4 points: better
3 points: same as conventional
2 points: slightly worse
1 points: very bad

### Material Appearance Evaluation

The appearance of the skin material was evaluated as follows only by visual inspection. In the appearance evaluation, the conventional skin material with no fine recesses (Comparative Example 4) was used as the reference (3 points).
4 points: better
3 points: same as conventional
2 points: worse

### Total Evaluation

The total sensory performance of the skin material was evaluated as: "⊚ (significantly improved)" when the material touch scored 5 points and the material appearance scored 3 points or more; "○ (improved)" when the material touch scored 4 points and the material appearance scored 3 points or more; and "× (not improved)" when the material touch scored 3 points or less.

The dimensional specifications and evaluation test results of the skin materials of Examples 1-9 and Comparative Examples 1-10 are summarized in TABLE.

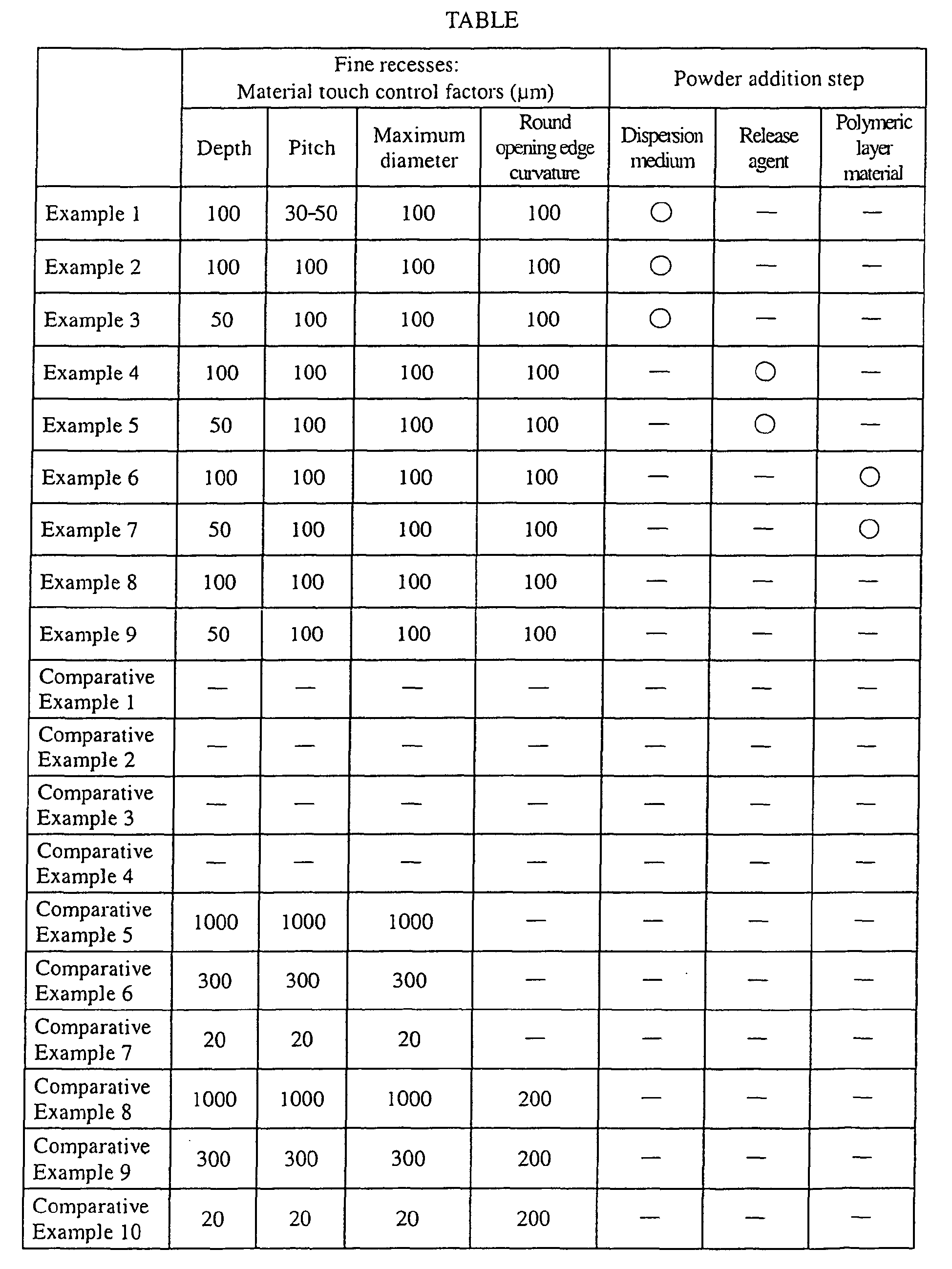

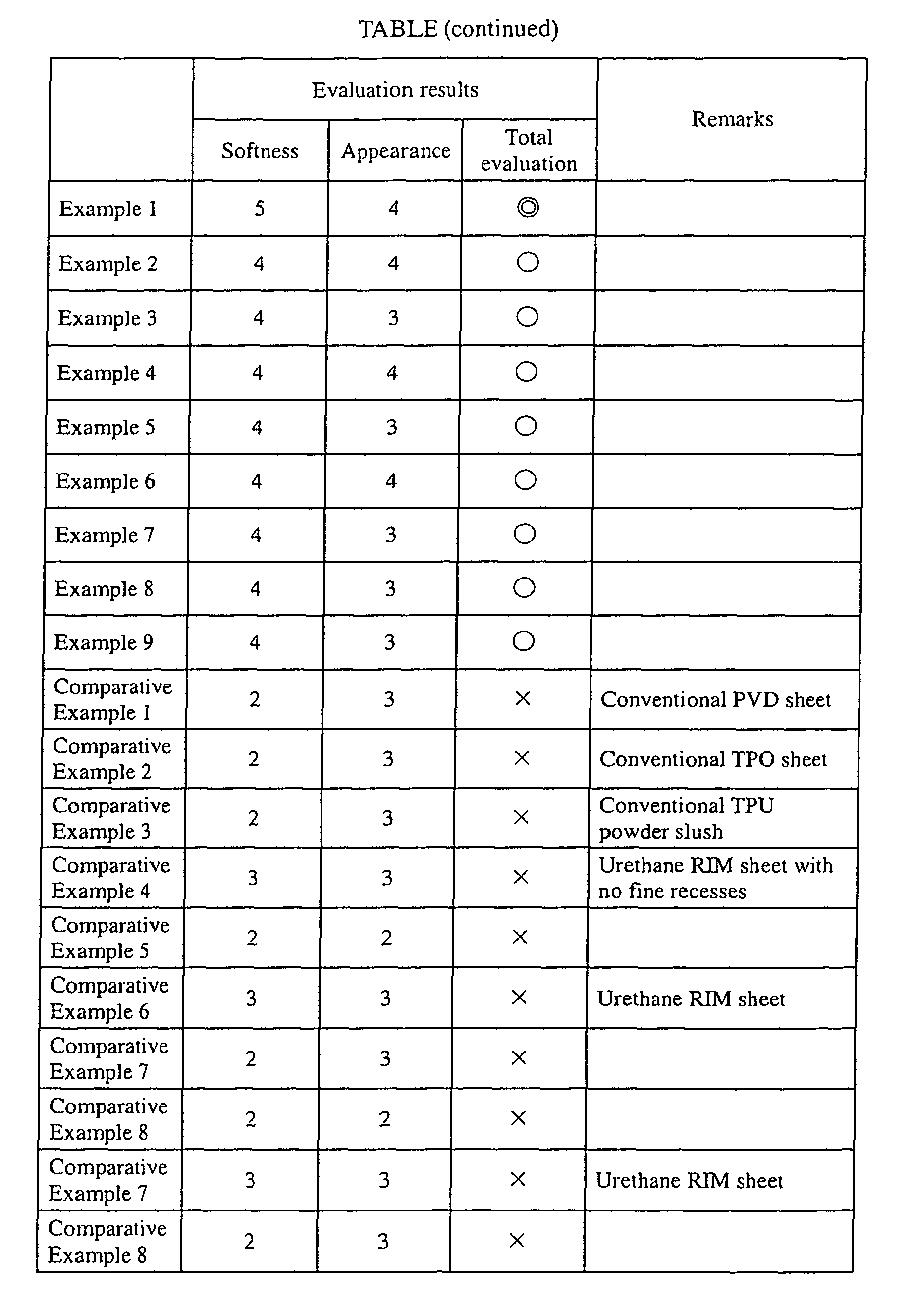

As is apparent from TABLE 1, each of the skin materials of Examples 1-9 had an improved touch without deterioration in appearance although the skin materials of Comparative Examples 1-10 showed deteriorations in touch or deteriorations in both of touch and appearance.

As described above, it is possible in the present embodiment to provide a skin material with an improved touch such as moist (supple) feel and smoothness without deterioration in appearance.

The entire contents of Japanese Patent Application No. 2007-150360 (filed on June 6, 2007) are herein incorporated by reference.

Although the present invention has been described with reference to the above-specific embodiments of the invention, the invention is not limited to these exemplary embodiments. Various modification and variation of the embodiments described above will occur to those skilled in the art in light of the above teachings. The skin material of the present invention can be applied to not only the automotive interior trim but also any other products such as furniture and bags. The scope of the invention is defined with reference to the following claims.

## Claims

1. A skin material (1) comprising:
a substrate (20); and
a polymeric layer (10) having a first surface adhering to the substrate (20) and a second surface being exposed to the outside and formed with fine recesses (10A), the fine recesses (10A) having a depth (S3) of 30 to 130 µm and a projected area ratio of 5 to 20% with respect to the total projected area of the second surface of the polymeric layer (10).

2. A skin material (1) according to claim 1, wherein the fine recesses (10A) have a pitch (S2) of 1 to 10 and a maximum diameter (S1) of 3 to 4 assuming that the depth (S3) of the fine recesses (10A) is 1.

3. A skin material (1) according to claim 1 or 2, wherein the fine recesses (10A) have a depth (S3) of 50 to 110 µm, a pitch (S2) of 50 to 300 µm and a maximum diameter (S1) of 90 to 130 µm.

4. A skin material (1) according to any one of claims 1 to 3, wherein the pitch (S2) of the fine recesses is irregular within the range of 50 to 300 µm.

5. A skin material (1) according to any one of claims 1 to 4, wherein the fine recesses (10A) have rounded opening edges (S4).

6. A skin material (1) according to claim 5, wherein the rounded opening edges (S4) of the fine recesses (10A) have a curvature radius of 30 to 100 µm.

7. A skin material (1) according to any one of claims 1 to 6, wherein the polymeric layer (10) has an embossed surface pattern on which the fine recesses (10A) are superimposed.

8. A skin material (1) according to any one of claims 1 to 7, wherein the polymeric layer (10) contains fine particles (12) at least partially exposed to the outside.

9. A skin material (1) according to claim 8, wherein the fine particles (12) have an average particle diameter of 8 to 30 µm.

10. A skin material (1) according to claim 8 or 9, wherein the fine particles (12) are contained in the polymeric layer (10) in an amount of 0.1 to 2.0 g/m².

11. A skin material (1) according to any one of claims 8 to 10, wherein the fine particles (12) are formed of at least one kind of material selected from the group consisting of plant origin materials of chaff, straw, bamboo, kenaf and hemp, animal origin materials of leather, silk, collagen, wool, chitin and chitosan and synthetic materials of polymer gel, acrylic bead and urethane bead.

12. A skin material (1) according to any one of claims 8 to 11, wherein the fine particles (12) are formed of either leather or silk with an average particle size of 8 to 30 µm and contained in the polymeric layer (10) in amount of 0.1 to 2.0 g/m².

13. A skin material (1) according to any one of claims 1 to 12, wherein the substrate (10) contains a nonthermoplastic, microfoamed urethane elastomer prepared by reaction injection molding.

14. A production method of a skin material (1) according to any one of claims 1 to 13, the production method comprising:
preparing a mold unit with front and back molds (100A, 100B);
first applying a release agent selected from the group consisting of a nylon-based release agent and a silicon-based release agent to the front mold (100A);
second applying a dispersion medium containing a powder of fine particles (12) and a dispersant to the front mold (100A);
third applying a raw material for the polymeric layer (10) to the front mold (100A);
assembling the front and back molds (100A, 100B) together to define a mold cavity in the mold unit;
injecting a raw material for the substrate (20) into the mold cavity;
reacting the raw material in the mold cavity to form the skin material (1) with the polymeric layer (10) and the substrate (20); and
opening the mold unit to release the skin material (1) from the mold unit.

15. A production method of a skin material (1) according to any one of claims 1 to 13, the production method comprising:
preparing a mold unit with front and back molds (100A, 100B);
first applying a release agent (50) containing a powder of fine particles (12), a dispersant and at least one of a silicon-based wax component and a process oil wax component to the front mold (100A);
second applying a raw material (60) for the polymeric layer to the front mold (100A);
assembling the front and back molds (100A, 100B) together to define a mold cavity in the mold unit;
injecting a raw material (70) for the substrate into the mold cavity;
reacting the raw material (70) in the mold cavity to form the skin material (1) with the polymeric layer (10) and the substrate (20); and
opening the mold unit to release the skin material (1) from the mold unit.

16. A production method of a skin material (1) according to any one of claims 1 to 13, the production method comprising:
preparing a mold unit with front and back molds (100A, 100B);
first applying a release agent to the front mold (100A);
second applying a raw material for the polymeric layer (10) containing a powder of fine particles (12) and a dispersant to the front mold (100A);
assembling the front and back molds (100A, 100B) together to define a mold cavity in the mold unit;
injecting a raw material for the substrate (20) into the mold cavity;
reacting the raw material in the mold cavity to form the skin material (1) with the polymeric layer (10) and the substrate (20); and
opening the mold unit to release the skin material (1) from the mold unit.

17. A composite skin for an automotive interior trim comprising a skin material (1) according to any one of claims 1 to 13.

18. A composite skin according to claim 17, comprising a core material laminated on a surface of the substrate (20) opposite from the polymeric layer (10), wherein the core material is a thermoplastic resin containing at least one selected from the group consisting of polypropylene, acrylonitrile butadiene styrene, polycarbonate/acrylonitrile butadiene styrene and any mixture thereof.

19. A composite skin according to claim 18, further comprising a foam material laminated between the skin material (1) and the core material, wherein the foam material is a semirigid thermosetting urethane foam having a density of 100 to 250 kg/m³.

## Amended claims

### Amended claims in accordance with Rule 137(2) EPC.

**1.** A skin material (I) comprising:
a substrate (20); and
a polymeric layer (10) having a first surface adhering to the substrate (20) and a second surface being exposed to the outside and formed with fine recesses (10A), the fine recesses (10A) having a depth (S3) of 30 to 130 µm and a projected area ratio of 5 to 20% with respect to the total projected area of the second surface of the polymeric layer (10).

**2.** A skin material (1) according to claim 1, wherein the fine recesses (10A) have a pitch (S2) of 1 to 10 and a maximum diameter (S1) of 3 to 4 assuming that the depth (S3) of the fine recesses (10A) is 1.

**3.** A skin material (1) according to claim 1 or 2, wherein the fine recesses (10A) have a depth (S3) of 50 to 110 µm, a pitch (S2) of 50 to 300 µm and a maximum diameter (S1) of 90 to 130 µm.

**4.** A skin material (1) according to any one of claims 1 to 3, wherein the pitch (S2) of the fine recesses is irregular within the range of 50 to 300 µm.

**5.** A skin material (1) according to any one of claims 1 to 4, wherein the fine recesses (10A) have rounded opening edges (S4).

**6.** A skin material (1) according to claim 5, wherein the rounded opening edges (S4) of the fine recesses (10A) have a curvature radius of 30 to 100 µm.

**7.** A skin material (1) according to any one of claims 1 to 6, wherein the polymeric layer (10) has an embossed surface pattern on which the fine recesses (10A) arc superimposed.

**8.** A skin material (1) according to any one of claims 1 to 7, wherein the polymeric layer (10) contains fine particles (12) at least partially exposed to the outside.

**9.** A skin material (1) according to claim 8, wherein the fine particles (12) have an average particle diameter of 8 to 30 µm.

**10.** A skin material (1) according to claim 8 or 9, wherein the fine particles (12) are contained in the polymeric layer (10) in an amount of 0.1 to 2.0 g/m².

**11.** A skin material (1) according to any one of claims 8 to 10, wherein the fine particles (12) are formed of at least one kind of material selected from the group consisting of plant origin materials of chaff, straw, bamboo, kenaf and hemp, animal origin materials of leather, silk, collagen, wool, chitin and chitosan and synthetic materials of polymer gel, acrylic bead and urethane bead.

**12.** A skin material (1) according to any one of claims 8 to 11, wherein the fine particles (12) are formed of either leather or silk with an average particle size of 8 to 30 µm and contained in the polymeric layer (10) in amount of 0.1 to 2.0 g/m².

**13.** A skin material (1) according to any one of claims I to 12, wherein the substrate (10) contains a nonthermoplastic, microfoamed urethane elastomer prepared by reaction injection molding.

**14.** A production method of a skin material (1) according to any one of claims 8 to 12, the production method comprising:
preparing a mold unit with front and back molds (100A, 100B);
first applying a release agent selected from the group consisting of a nylon-based release agent and a silicon-based release agent to the front mold (100A);
second applying a dispersion medium containing a powder of fine particles (12) and a dispersant to the front mold (100A);
third applying a raw material for the polymeric layer (10) to the front mold (100A);
assembling the front and back molds (100A, 100B) together to define a mold cavity in the mold unit;
injecting a raw material for the substrate (20) into the mold cavity;
reacting the raw material in the mold cavity to form the skin material (1) with the polymeric layer (10) and the substrate (20); and
opening the mold unit to release the skin material (1) from the mold unit.

**15.** A production method of a skin material (1) according to any one of claims 8 to 12, the production method comprising:
preparing a mold unit with front and back molds (100A, 100B);
first applying a release agent (50) containing a powder of fine particles (12), a dispersant and at least one of a silicon-based wax component and a process oil wax component to the front mold (100A);
second applying a raw material (60) for the polymeric layer to the front mold (100A);
assembling the front and back molds (100A, 100B) together to define a mold cavity in the mold unit;
injecting a raw material (70) for the substrate into the mold cavity;
reacting the raw material (70) in the mold cavity to form the skin material (1) with the polymeric layer (10) and the substrate (20); and
opening the mold unit to release the skin material (1) from the mold unit.

**16.** A production method of a skin material (1) according to any one of claims 8 to 12, the production method comprising:
preparing a mold unit with front and back molds (100A, 100B);
first applying a release agent to the front mold (100A);
second applying a raw material for the polymeric layer (10) containing a powder of fine particles (12) and a dispersant to the front mold (100A);
assembling the front and back molds (100A, 100B) together to define a mold cavity in the mold unit;
injecting a raw material for the substrate (20) into the mold cavity;
reacting the raw material in the mold cavity to form the skin material (1) with the polymeric layer (10) and the substrate (20); and
opening the mold unit to release the skin material (1) from the mold unit.

**17.** A composite skin for an automotive interior trim comprising a skin material (1) according to any one of claims 1 to 13.

**18.** A composite skin according to claim 17, comprising a core material laminated on a surface of the substrate (20) opposite from the polymeric layer (10), wherein the core material is a thermoplastic resin containing at least one selected from the group consisting of polypropylene, acrylonitrile butadiene styrene, polycarbonate/acrylonitrile butadiene styrene and any mixture thereof.

**19.** A composite skin according to claim 18, further comprising a foam material laminated between the skin material (1) and the core material, wherein the foam material is a semirigid thermosetting urethane foam having a density of 100 to 250 kg/m³.
